# EUROPÄISCHE PATENTSCHRIFT

(11) **EP 1 070 604 B1**
(45) Veröffentlichungstag und Bekanntmachung des Hinweises auf die Patenterteilung: **21.05.2003**
(21) Anmeldenummer: 99890242.3
(22) Anmeldetag: 20.07.1999
(51) Int. Cl.: B60B 27/00, B60B 3/14

(54) **Radträger**
Support for wheel
Support de roue

(43) Veröffentlichungstag der Anmeldung: 24.01.2001
(73) Patentinhaber: Pankl R&D GmbH, 8600 Bruck an der Mur (AT)
(72) Erfinder: Pankl, Gerold, 8600 Bruck an der Mur (AT)
(74) Vertreter: Patentanwälte BARGER, PISO & PARTNER

(56) Entgegenhaltungen:
- EP-A- 0 524 915
- DE-A- 3 814 920
- DE-C- 3 942 651
- US-A- 4 700 813
- US-A- 5 868 409

## Beschreibung

Die Erfindung betrifft einen Radträger für Hochleistungsfahrzeuge gemäß dem Oberbegriff des Anspruches 1.

Radträger für übliche PKW sind aus der US 5,868,409 A bekannt. Dabei ist eine Art Lageraufnahmezentrum in Form eines geflanschten Rohres mit einem Verbindungsteil, der diverse Befestigungspunkte, beispielsweise für eine Schraubenfeder, trägt, verbunden. Für Hochleistungsfahrzeuge ist ein derartiger Radträger wegen der großen Masse bei kleiner Belastbarkeit der Verbindung zwischen dem Lageraufnahmezentrum und dem Verbindungsteil ungeeignet.

Aus der gattungsgemäßen EP 0 524 915 A geht ein Radträger für übliche PKW hervor, bei denen ein Lageraufnahmezentrum axial einem Verbindungsteil für die diversen Befestigungspunkte benachbart angeordnet und mit diesem durch achsparallele Schrauben verbunden. Auch hier ist die Konstruktion für ein Hochleistungsfahrzeug zu schwer und doch zu fragil.

Die US 4,700,813 A offenbart eine Konstruktion ohne eigentlichen Verbindungsteil, an einem Lageraufnahmeteil ist nur die Bremsvorrichtung befestigt, die anderen Befestigungspunkte sind nicht dargestellt bzw. beschrieben.

Radträger der eingangs genannten Art, die bei Hochleistungsfahrzeugen eingesetzt werden, besitzen in ihrem zentralen Bereich Lagersitzé für die Lager einer Stummelwelle, die die Felge trägt oder mit ihr verbunden ist. Im peripheren Bereich des Radträgers sind Befestigungspunktc vorgesehen, um die radseitigen Elemente der Radaufhängung anzuschließen und die Bremsbacken für die Scheibenbremse zu montieren.

Derartige Radträger weisen somit einen inneren Bereich, Lageraufnahmezentrum genannt, auf, in dem die Lagersitze vorgesehen sind und einen äußeren Bereich, auch Hülle genannt, der die verschiedenen Anlenkpunkte, meist in Form von Einsätzen trägt. Abgesehen von diesen Einsätzen sind die Radträger wegen ihrer hohen mechanischen Belastung ein- oder mehrstückig ausgebildet.

Bei den Hochleistungsfahrzeugen, bei denen derartige Radträger verwendet werden, ist es bisweilen notwendig, Kühlluft achsparallel durch das Lageraufnahmezentrum zur Bremsscheibe zu führen. Aus diesem Grund besteht das Lageraufnahmezentrum aus einem relativ dünnwandigen Innenring, der die Lagersitze trägt und einem im wesentlichen radial verlaufenden Rippenwerk zischen dem Innenring und der Hülle, das nach Art von Speichen die Verbindung vom Innenring zur Hülle herstellt.

Derartige Radträger bestehen gemäß dem Stand der Technik zumeist aus Leichtmetall oder Stahl und werden ein- oder mehrstückig gegossen oder durch Funkenerosion oder spanabhebende Bearbeitung bzw. Schweißung ausgebildet, wobei pro Stück Bearbeitungszeiten von bis zu 100 Stunden anfallen können. Die Preise derartiger Radträger sind daher außerordentlich hoch, doch wird dies in Kauf genommen, da anders die notwendige Steifigkeit und das angestrebte niedrigstmögliche Gewicht nicht erreichbar sind. Dazu muß noch darauf hingewiesen werden, daß diese Radträger zur nichtgefederten Masse des Kraftfahrzeuges gehören und eine Reduzierung dieser nichtgefederten Masse eine starke Verbesserung der Straßenlage und der Fahreigenschaften bewirkt.

Es ist ein Ziel der Erfindung, einen solchen Radträger zu schaffen, bei dem das Gewicht weiter reduziert ist, ohne daß seine Steifigkeit darunter leidet.

Erfindungsgemäß werden diese Ziele dadurch erreicht, daß der Radträger die Merkmale des kennzeichnenden Teils des Anspruches 1 aufweist. Durch diese Maßnahmen ist es möglich, ohne Stabilitätsverlust zu einem Radträger zu kommen, der einfacher herzustellen, dadurch billiger und darüberhinaus auch leichter ist als die bisher bekannten Radträger.

Die Unteransprüche definieren vorteilhafte Ausgestaltungen der Erfindung.

Als Material für den erfindungsgemäßen Radträger kommen unabhängig voneinander für die einzelnen Teile metallische Werkstoffe wie Titan, Aluminium, Stahl, nicht-metallische Werkstoffe wie (faser)verstärkte Kunststoffe, insbesondere kohlefaserverstärkte Kunststoffe und auch die sogenannten MMCs (Metall Matrix Composites) in Frage.

Die Verbindung der zumindest zwei Teile, aus denen der erfindungsgemäße Radträger besteht, erfolgt durch Kleben, Nieten oder dgl., wobei zusätzliche, formschlussartige Verbindungen schaffende Ausgestaltungen der Klebeflächen bevorzugt werden.

Die Erfindung wird im folgenden an Hand der Zeichnung näher erläutert. Dabei zeigt
die Fig. 1 einen Axialschnitt durch einen erfindungsgemäßen Radträger,
die Fig. 2 eine Seitenansicht in gegenüber der Fig. 1 verdrehter Lage und
die FIg. 3 eine perspektivische Ansicht.

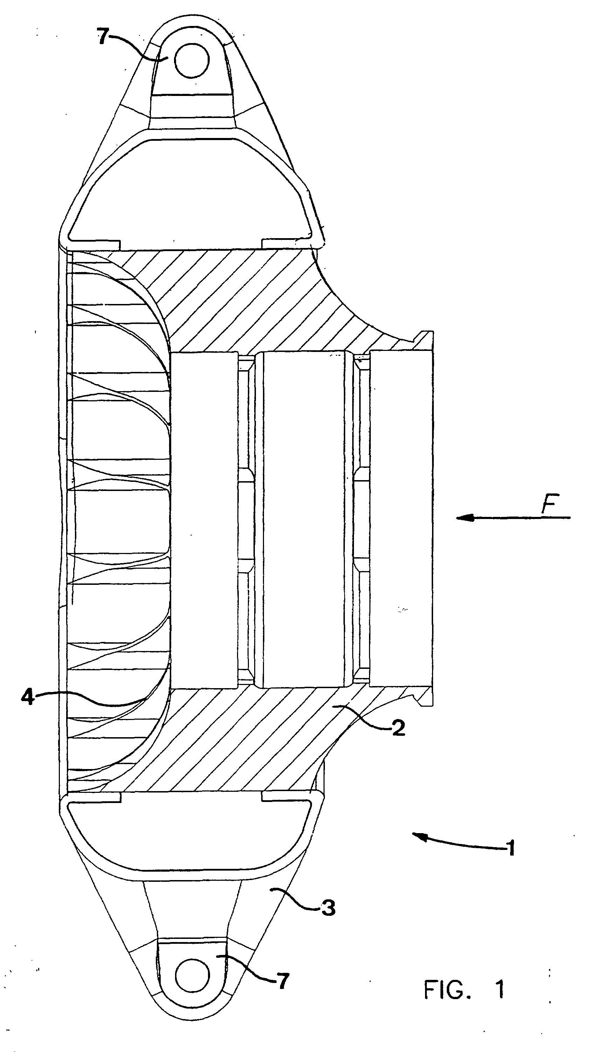

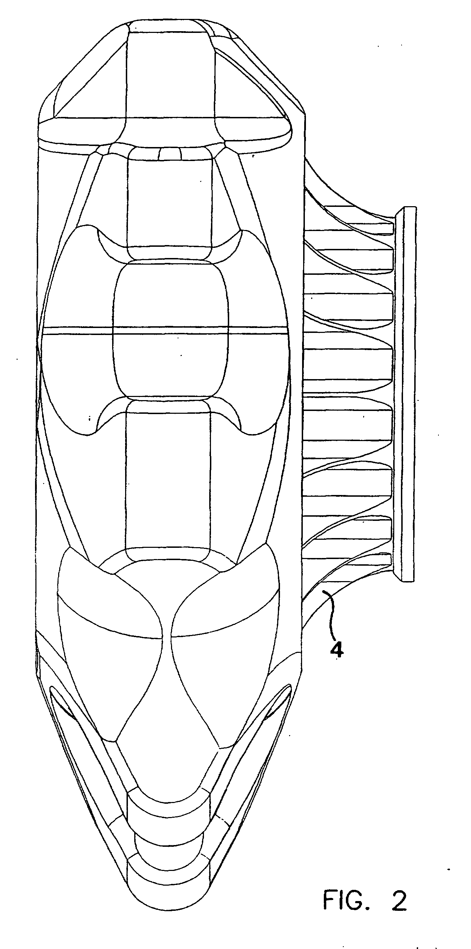

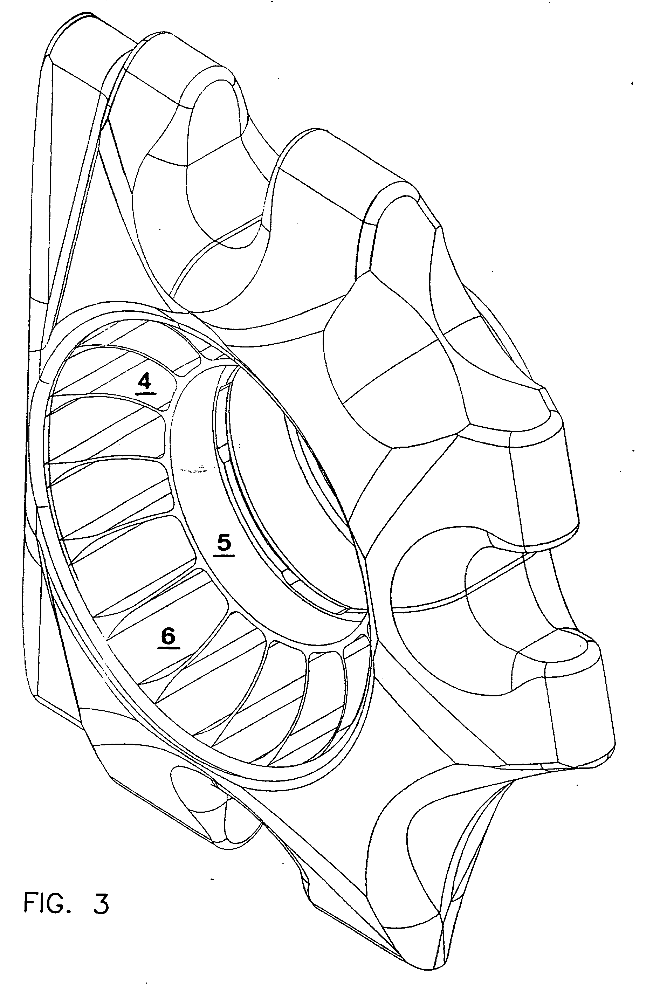

Wie aus Fig. 1 ersichtlich, besteht ein erfindungsgemäßer Radträger 1 im wesentlichen aus dem zentralen Bereich, dem Lageraufnahmezentrum 2 und der äußeren Hülle 3. Es wurde in FIg. 1 das Lageraufnahmezentrum 2 geschnitten dargestellt, obwohl der größte Bereich der Schnittfläche durch Rippen 4 führt, die aus Fig. 2 und 3 besser zu entnehmen sind.

Das Lageraufnahmezentrum 2 besteht im wesentlichen aus den schon genannten Rippen 4, die zwischen einem Innenring 5 und einem Außenring 6 (Fig. 3) verlaufen. Es wurden im dargestellten Ausführungsbeispiel im wesentlichen radial verlaufende Rippen 4 dargestellt, doch ist dies nicht notwendig. Es kann, beispielsweise um die Steifigkeit des erfindungsgemäßen Radträgers zu erhöhen, vorgesehen sein, die Rippen 4 nach Art eines aus drei Ecken aufgebauten Netzwerkes anzuordnen. Es ist selbstverständlich auch möglich, andere Anordnungen, beispielsweise Wabenkonstruktionen oder schräg zueinander, aber nicht radial angeordnete Rippen vorzusehen. Wesentlich ist, daß zwischen dem Innenring 5 und dem Außenring 6 ein Bereich vorgesehen ist, in dem Luft in Richtung des Pfeiles F in Fig. 1 strömen kann. Die Luftführung kann auch anders gewählt werden, so daß die Rippen entfallen können.

Wie aus den Figuren hervorgeht, ist es durch die erfindungsgemäße getrennte Bauweise der beiden Hauptbestandteile des Radträgers möglich, das Lageraufnahmezentrum kostengünstig, beispielsweise bei Verwendung eines metallischen Lageraufnahmezentrums durch Präzisionsgießen, herzustellen. Es ist selbstverständlich auch möglich, das Lageraufnahmezentrum aus MMC herzustellen oder aus einem verstärkten Kunststoff, wobei bei letzterem vorbereitete flächige Gebilde aus imprägniertem Verstärkungsmaterial in eine Form eingebracht und passend vergossen und verbacken werden.

Der erfindungsgemäße Aufbau der Hülle 3 ist insbesondere aus Fig. 1 gut ersichtlich: sie besteht beim dargestellten Ausführungsbeispiel aus einem relativ dünnwandigen, im wesentlichen torusartigen Gebilde aus verstärktem Kunststoff oder MMC und kann entweder einteilig oder mehrteilig, dann bevorzugt nach Segmenten geteilt, ausgebildet sein. In den verschiedenen äußeren Bereichen, die insbesondere aus Fig. 3 gut ersichtlich sind, sind Einsätze 7 in Form von Buchsen, Hülsen mit Innengewinden u.dgl. vorgesehen, die, je nach Herstellungsart der Hülle 3 entweder als verlorene Kerne bei der Herstellung der Hülle eingesetzt werden oder nach deren Herstellung eingepreßt oder mitgebacken werden.

Es wird im gezeigten Ausführungsbeispiel die Klebfläche zwischen dem Lageraufnahmezentrum 2 und der Hülle 3 nur schematisch als glatte Zylinderfläche angedeutet, doch ist es selbstverständlich möglich, alle dem Fachmann zur Erhöhung der Festigkeit von Klebflächen bekannten Maßnahmen vorzusehen. So kann das Lageraufnahmezentrum an ihrem Außenmantel 6 einzelne Vorsprünge oder eine in Umfangsrichtung verlaufende Erhebung aufweisen, die sowohl als Anschlag für die aufzuschiebende Hülle 3 dient als auch die Festigkeit der Klebeverbindung erhöht. Es ist selbstverständlich auch nicht notwendig, daß beide Schultern der Hülle 3 und damit der Außenring 6 gleichen Durchmesser aufweisen, zur Aufbringung der Hülle 3 auf das Lageraufnahmezentrum 2 kann es vorteilhaft sein, den Außenring 6 des Lageraufnahmezentrums 2 mit zwei unterschiedlichen Radien auszustatten.

Zu den Zeichnungen ist zu sagen, daß es sich um Prinzipdarstellungen handelt, die nur schematischer Natur sind und einzelne Konturen aufzeigen, die die Ausbildung verdeutlichen, ohne daß es sich dabei um Trennlinien unterschiedlicher oder zusammengesetzter Bauteile handelt.

Es sind aus diesem Grund auch nur in der Fig. 1 zwei Einsätze 7 schematisch dargestellt, während in den Fig. 2 und 3 weder solche Einlagen, noch die dafür vorgesehenen Öffnungen gezeigt sind.

Es kann das Lageraufnahmezentrum 2 und die Hülle 3 jeweils unabhängig voneinander aus einem der genannten Materialien aufgebaut sein, wobei es selbstverständlich möglich ist, insbesondere die Hülle 3 in ihren Außenbereichen anders als dargestellt auszubilden und beispielsweise nicht nur kleine Einsäzte, wie die angedeuteten Einsätze 7 nach Art verlorener Kerne bei der Herstellung der Hülle 3 zu verwenden und so mit der Hülle zu verbinden, sondern größere Bereiche getrennt voneinander herzustellen und als eine Art Einsatzteil in die endgültige Form einzubringen und so mit der restlichen Hülle zu verbinden.

Es ist auch möglich, die Hülle 3 mehrteilig auszubilden und die einzelnen Teile auf dem Lageraufnahmezentrum 2 aufzukleben und dabei auch miteinander zu verkleben, doch ist dies wegen der Justierprobleme und der einzuhaltenden Genauigkeiten nur in Sonderfällen vorteilhaft.

Zur Herstellung der Hülle 3 ist zu sagen, daß sie beispielsweise, wie insbesondere aus Fig. 2 gut ersichtlich ist, in einer zweiteiligen Form die normal zur Achse geteilt ist, leicht aus sogenannten Preprägs zu fertigen und nach erfolgter Fertigstellung ausformbar ist. Bei der Verwendung von MMCs kommen die dafür üblichen Fertigungsverfahen in Frage, Metallteile können durch Feingießen oder spanende Bearbeitung oder Funkenerosion hergestellt bzw. endbearbeitet werden.

## Patentansprüche

1. Radträger für Hochleistungsfahrzeuge mit einem inneren Bereich, auch Lageraufnahmezentrum (2) genannt, in dem Lagersitze vorgesehen sind und mit einem äußeren Bereich, auch Hülle (3) genannt, der die verschiedenen Anlenkpunkte, gegebenenfalls mit Einsätzen (7) versehen, trägt, wobei der Radträger zumindest zweiteilig ausgebildet ist, **dadurch gekennzeichnet, daß** der das Lageraufhahmezentrum (2) bildende Teil aus einem Innenring (5), Rippen (4) und einem Außenring (6) besteht und dass der andere, gegebenenfalls mehrstückig ausgebildete Teil, die Hülle (3) bildet und auf dem Außenring (6) befestigt ist.

2. Radträger nach Anspruch 1, **dadurch gekennzeichnet, daß**, die Teile (2, 3) des Radträgers unabhängig voneinander aus metallischen Werkstoffen wie Titan, Aluminium, Stahl, aus nicht-metallischen Werkstoffen wie verstärkten Kunststoffen, insbesondere kohlefaserverstärkten Kunststoffen oder aus sogenannten MMCs, bestehen.

3. Radträger nach Anspruch 1 oder 2, **dadurch gekennzeichnet, daß** die Rippen (4) schräg zur radialen Richtung verlaufen.

4. Radträger nach einem der Ansprüche 1 bis 3, **dadurch gekennzeichnet, daß** die Rippen (4) mit Abschnitten des Außenringes (6) und/oder Abschnitten des Innenringes (5) im wesentlichen dreieckige oder wabenförmige Querschnitte ausbilden.

5. Radträger nach einem der vorangehenden Ansprüche, **dadurch gekennzeichnet, daß** die Hülle (3) aus einem im wesentlichen dünnwandigen, torusartigen Hohlkörper besteht, der entlang zumindest einer im wesentlichen ringförmigen Klebefläche mit dem Lageraufnahmezentrum (2) verklebt, vernietet od.dgl. ist.

6. Radträger nach Anspruch 5, **dadurch gekennzeichnet, daß** die Hülle (3) mit zwei zueinander gerichteten Randstreifen entlang zweier im wesentlichen parallel zueinander verlaufender, zylindrischer Klebeflächen mit der Außenseite des Außenringes (6) des Lageraufnahmezentrums (2) verklebt, vernietet od.dgl. ist.

## Claims

1. Wheel carrier for high-performance vehicles with an inner region, also referred to as the bearing-housing centre (2), in which bearing seats are provided, and with an outer region, also referred to as the shell (3), which carries the various pivotal-attachment points, with inserts (7) if required, the wheel carrier being of at least two-part design, **characterized in that** the part forming the bearing-housing centre (2) comprises an inner ring (5), ribs (4) and an outer ring (6), and **in that** the other part, which may be of multi-piece design, forms the shell (3) and is secured on the outer ring (6).

2. Wheel carrier according to Claim 1, **characterized in that** the parts (2, 3) of the wheel carrier are composed independently of one another of metallic materials such as titanium, aluminium, steel, of nonmetallic materials such as reinforced plastics, in particular plastics reinforced with carbon fibres, or of "MMCs".

3. Wheel carrier according to Claim 1 or 2, **characterized in that** the ribs (4) extend obliquely to the radial direction.

4. Wheel carrier according to one of Claims 1 to 3, **characterized in that** the ribs (4) form essentially triangular or honeycomb cross sections with portions of the outer ring (6) and/or portions of the inner ring (5).

5. Wheel carrier according to one of the preceding claims, **characterized in that** the shell (3) comprises an essentially thin-walled toroidal hollow body, which is adhesively bonded, riveted or the like to the bearing-housing centre (2) along at least one essentially annular adhesive bonding surface.

6. Wheel carrier according to Claim 5, **characterized in that** the shell (3) is adhesively bonded, riveted or the like to the outside of the outer ring (6) of the bearing-housing centre (2) by means of two mutually facing edge strips, along two cylindrical adhesive bonding surfaces extending parallel to one another.

## Revendications

1. Support de roue pour véhicules de grande puissance, comportant une partie intérieure, également désignée comme étant le centre de logement de palier (2), dans laquelle sont prévus des sièges de roulement, et une partie extérieure également désignée sous le terme d'enveloppe (3), qui porte les différents points d'articulation, éventuellement équipés d'inserts (7), le support de roue étant formé d'au moins deux parties, **caractérisé en ce que** la partie qui forme le centre de logement de palier (2) est constituée par une bague intérieure (5), des nervures (4) et une bague extérieure (6), et que l'autre partie éventuellement formée de plusieurs éléments, forme l'enveloppe (3) et est fixée sur la bague extérieure (6).

2. Support de roue selon la revendication 1, **caractérisé en ce que** les parties (2, 3) du support de roue sont formées indépendamment les unes des autres, par des matériaux métalliques tels que du titane, de l'aluminium, de l'acier, des matériaux non métalliques tels que des matières plastiques renforcées, notamment des matières plastiques renforcées de fibres de carbone ou par ce qu'on appelle de MMC.

3. Support de roue selon la revendication 1 ou 2, **caractérisé en ce que** les nervures (4) s'étendent obliquement par rapport à la direction radiale.

4. Support de roue selon l'une des revendications 1 à 3, **caractérisé en ce que** les nervures (4) sont formées par des sections de la bague extérieure (6) et/ou des sections de la bague intérieure (5) dans des sections transversales de forme essentiellement triangulaire ou en nid d'abeilles.

5. Support de roue selon l'une des revendications précédentes, **caractérisé en ce que** l'enveloppe (3) est constituée par un corps creux de forme torique, essentiellement à paroi mince, qui est collée, rivetée ou analogue le long d'au moins une surface de collage essentiellement annulaire, au centre de logement de palier (2).

6. Support de roue selon la revendication 5, **caractérisé en ce que** l'enveloppe (3) est collée, rivetée ou analogue, par deux bandes marginales dirigées l'une vers l'autre, le long de deux surfaces cylindriques de collage, qui sont essentiellement parallèles entre elles, au côté extérieur de la bague extérieure (6) du centre de logement de palier (2).
